# EUROPEAN PATENT SPECIFICATION

(11) **EP 4 411 730 B1**
(45) Date of publication and mention of the grant of the patent: **28.10.2026**
(21) Application number: 24155320.5
(22) Date of filing: 01.02.2024
(51) Int. Cl.: G10L 15/18, G10L 15/22, G06F 40/30, B60K 35/00, B60K 35/26, B60K 35/29

(54) **SYSTEM AND METHOD FOR DESCRIPTION BASED QUESTION ANSWERING FOR VEHICLE FEATURE USAGE**
SYSTEM UND VERFAHREN ZUR BESCHREIBUNGSBASIERTEN FRAGENBEANTWORTUNG ZUR VERWENDUNG VON FAHRZEUGMERKMALEN
SYSTÈME ET PROCÉDÉ DE RÉPONSE À DES QUESTIONS BASÉE SUR UNE DESCRIPTION POUR L'UTILISATION DE CARACTÉRISTIQUES DE VÉHICULE

(30) Priority: 02.02.2023 US 202318105066
(43) Date of publication of application: 07.08.2024
(73) Proprietor: Cerence Operating Company, Burlington, MA 01803 (US)
(72) Inventor: MÖNNING, Nils, Burlington, 01803 (US); LI, Zile, Burlington, 01803 (US); BLASIG, Reinhard, Burlington, 01803 (US); HANG, Chi, Burlington, 01803 (US); SINGH, Kuldeep, Burlington, 01803 (US)
(74) Representative: Haseltine Lake Kempner LLP

(56) References cited:
- US-A1- 2020 216 089
- US-B1- 10 713 289

## Description

### TECHNICAL FIELD

Aspects of the disclosure generally relate to systems and methods for description-based question answering for vehicle feature usage. The invention is defined by the claims.

### BACKGROUND

Modern vehicles include numerous features, functions, and capabilities, many unknown to vehicle passengers. When vehicle occupants are interested in using a new or previously unused feature, the occupants typically need to look up how to use such feature. This may include an online search, reviewing the vehicle manual, searching a mobile application for the vehicle's manufacturer, etc. However, such mechanisms for using vehicle features may be time consuming, and not encourage usages of the features. The document US2020216089A1 relates to the efficient management and compact presentation of data or content with respect to a vehicle. For example, an operator of a vehicle may desire content related to vehicle operation, including, among many other forms of data, user manual information, warranty information, parts data, maintenance logs, etc. The disclosed techniques can use query inputs to optimize data presentation and provide augmented data to a user via an interactive user interface. The document US10713289B1 relates to systems, methods, and devices for performing interactive question answering using data source credibility and conversation entropy are disclosed. A speech-controlled device captures audio including a spoken question, and sends audio data corresponding thereto to a server(s). The server(s) performs speech processing on the audio data, and determines various stored data that can be used to determine an answer to the question. The server(s) determines which stored data to use based on the credibility of the source from which the stored data was received. The server(s) may also determine a number of user interactions needed to obtain data in order to fully answer the question and may select a question for a dialog soliciting further data based on the number of user interactions.

### SUMMARY

A contextual answering system is claimed. The contextual answering system is for processing a user spoken utterance and providing a response to the user spoken utterance may include a vehicle head unit configured to receive microphone signals indicative of a user utterance; and a processor programed to receive data indicative of a vehicle state, receive the user spoken utterance, perform semantic analysis on the user spoken utterance based at least in part on a context of the user spoken utterance and vehicle state, select a knowledge base as a source for information regarding the user spoken utterance based on the semantic analysis; and provide a response to the user spoken utterance from the selected knowledge base to the vehicle head unit.

A method for processing a user spoken utterance and providing a response to the user spoken utterance is claimed. The method may include receiving the user spoken utterance, performing semantic analysis on the user spoken utterance, selecting a knowledge base as a source for information regarding the user spoken utterance based on the semantic analysis, and providing a response to the user spoken utterance from the selected knowledge base to a user device.

A contextual answering system for processing a user spoken utterance and providing a response to the user spoken utterance may include a vehicle head unit configured to receive microphone signals indicative of a user utterance; and a processor programed to receive the user spoken utterance, perform semantic analysis on the user spoken utterance, select a knowledge base from a plurality of knowledge bases as a source for information regarding the user spoken utterance based on the semantic analysis; and provide a response to the user spoken utterance from the selected knowledge base to the vehicle head unit.

### BRIEF DESCRIPTION OF THE DRAWINGS

FIG. 1 illustrates a block diagram for an automotive voice assistant system having a multimodal input processing system in accordance with one embodiment.
FIG. 2 illustrates an example contextual answering system as referenced with respect to FIG. 1.
FIG. 3 illustrates an example process for the contextual answering system of FIG. 2.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

As vehicles become equipped and updated with more and more features, functions, and capabilities, the ability for drivers and passengers to use so many features may be cumbersome. Many times, when vehicle occupants are interested in using a new or previously unused feature, the occupants typically need to look up how to use such feature. This may include an online search, reviewing the vehicle manual, searching a mobile application for the vehicle's manufacturer, etc. However, such mechanisms for using vehicle features may be time consuming, and do not encourage usage of the features. Such online resources may lead to misinformation, be time consuming, not be specific to the user's vehicle, come from an uncredible source, etc. The user may use a vehicle voice assistant to ask questions such as, "how can I activate park assist," or "where can I find the cruise control."

The system described herein provides the user with an answer to such questions from available knowledge sources such as the owner's manual, sensor information, manufacturer knowledge base, etc. The user may also simply make a statement, such as "cruise control," and receive a response based on context of the statement. This may be especially important as users do not necessarily know what pinpointed question to ask in order to receive an appropriate response. However, if the user adequately describes the situation, the system herein may retrieve the necessary information from trusted sources and provide an answer to the user. For example, the user may not know an exact term for a maintenance issue, but may describe what is happening to the vehicle. The system may be able to perform semantic and contextual processing on the description and provide a relevant answer to the user.

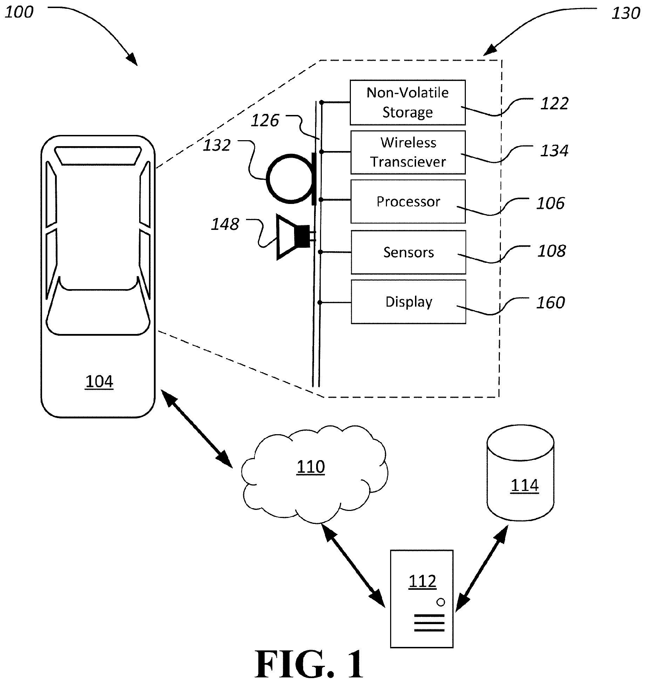

FIG. 1 illustrates a block diagram for an automotive voice assistant system 100 having a multimodal input processing system in accordance with one embodiment. The automotive voice assistant system 100 may be designed for a vehicle 104 configured to transport passengers. The vehicle 104 may include various types of passenger vehicles, such as crossover utility vehicle (CUV), sport utility vehicle (SUV), truck, recreational vehicle (RV), boat, plane or other mobile machine for transporting people or goods. Further, the vehicle 104 may be autonomous, partially autonomous, selfdriving, driverless, or driver-assisted vehicles. The vehicle 104 may be an electric vehicle (EV), such as a battery electric vehicle (BEV), plug-in hybrid electric vehicle (PHEV), hybrid electric vehicle (HEVs), etc.

The vehicle 104 may be configured to include various types of components, processors, and memory, and may communicate with a communication network 110. The communication network 110 may be referred to as a "cloud" and may involve data transfer via wide area and/or local area networks, such as the Internet, a global navigation satellite system (GNSS), cellular networks, Wi-Fi, Bluetooth, etc. The communication network 110 may provide for communication between the vehicle 104 and an external or remote server 112 and/or database 114, as well as other external applications, systems, vehicles, etc. This communication network 110 may provide navigation, music or other audio, program content, marketing content, internet access, speech recognition, cognitive computing, artificial intelligence, to the vehicle 104.

In one example, the communication network 110 may allow for vehicle-to-vehicle communication. This vehicle-to-vehicle communication may include various functions, such as voice messaging or calling between vehicles, playing karaoke between vehicles, sending or receiving media files, etc.

A processor 106 may instruct loudspeakers 148 to playback various audio streams, and specific configurations. For example, the user may request that the playback be of a specific song with only the instrumental track being played. Other options include additionally also including the lead vocals track in the playback. In another option, the playback may include the instrumental track as well as a playback of the user's recorded lead vocals. The processor 106 may employ various audio processing techniques to facilitate in car communications. For example, various filters, compressors, amplifiers, etc., may be applied to the audio signals to increase user satisfaction and facilitate the incar communications. In some examples, a wake-up word may be spoken during live playback of a singer's voice. In this case the processor 106 may provide in car communications (ICC) for processing without the utterance being affected by voice effects such as reverb that may be applied to the singer's voice. That is, the wake-up word may be detected, as well as the utterance following the wake-up word. The utterance may be received by the microphone 132 and processed for ICC without the application of the voice effects typically applied to karaoke content.

The remote server 112 and the database 114 may include one or more computer hardware processors coupled to one or more computer storage devices for performing steps of one or more methods as described herein and may enable the vehicle 104 to communicate and exchange information and data with systems and subsystems external to the vehicle 104 and local to or onboard the vehicle 104. The vehicle 104 may include one or more processors 106 configured to perform certain instructions, commands and other routines as described herein. Internal vehicle networks 126 may also be included, such as a vehicle controller area network (CAN), an Ethernet network, and a media oriented system transfer (MOST), etc. The internal vehicle networks 126 may allow the processor 106 to communicate with other vehicle 104 systems, such as a vehicle modem, a GNSS module and/or vehicle-to-vehicle communications, cellular, etc., configured to provide current vehicle location and heading information, and various vehicle electronic control units (ECUs) configured to corporate with the processor 106.

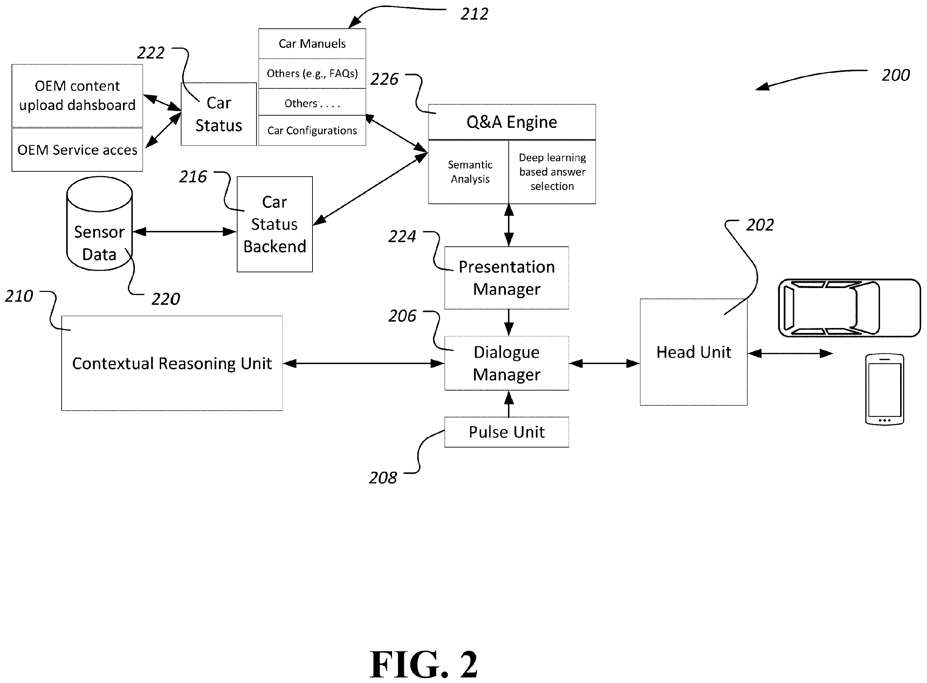

The processor 106 may execute instructions for certain vehicle applications, including navigation, infotainment, climate control, etc. Instructions for the respective vehicle systems may be maintained in a non-volatile manner using a variety of types of computer-readable storage medium 122. The computer-readable storage medium 122 (also referred to herein as memory 122, or storage) includes any non-transitory medium (e.g., a tangible medium) that participates in providing instructions or other data that may be read by the processor 106. Computer-executable instructions may be compiled or interpreted from computer programs created using a variety of programming languages and/or technologies, including, without limitation, and either alone or in combination, Java, C, C++, C#, Objective C, Fortran, Pascal, Java Script, Python, Perl, and PL/structured query language (SQL). Likewise, the server 112 may include a processor and controller configured to provide instructions for certain applications, including the contextual answering system 200, described in more detail in FIG. 2.

The processor 106 may also be part of a processing system 130. The processing system 130 may include various vehicle components, such as the processor 106, memories, sensors, input devices, displays, etc. The processing system 130 may include one or more input and output devices for exchanging data processed by the processing system 130 with other elements shown in FIG. 1. Certain examples of these processes may include navigation system outputs (e.g., time sensitive directions for a driver), incoming text messages converted to output speech, vehicle status outputs, and the like, e.g., output from a local or onboard storage medium or system. In some embodiments, the processing system 130 provides input/output control functions with respect to one or more electronic devices, such as a heads-up-display (HUD), vehicle display, and/or mobile device of the driver or passenger, sensors, cameras, etc.

The vehicle 104 may include a wireless transceiver 134, such as a BLUETOOTH module, a ZIGBEE transceiver, a Wi-Fi transceiver, an IrDA transceiver, a radio frequency identification (RFID) transceiver, etc., configured to communicate with compatible wireless transceivers of various user devices, as well as with the communication network 110.

The vehicle 104 may include various sensors 108 and input devices as part of the multimodal processing system 130. For example, the vehicle 104 may include at least one microphone 132. The microphone 132 may be configured receive audio signals from within the vehicle cabin, such as acoustic utterances including spoken words, phrases, or commands from a user. This may be part of the contextual answering system 200 as described in FIG. 2. The microphone 132 may also be configured to receive other acoustic sounds such as singing, tapping, knocking, etc., and may be used for other vehicle features such as active noise cancelation, hands-free interfaces, etc. The microphone 132 may also include an audio input configured to provide audio signal processing features, including amplification, conversions, data processing, etc., to the processor 106. The at least one microphone 132 may include a plurality of microphones 132 arranged throughout the vehicle cabin.

The sensors 108 may include status sensors for various vehicle components such as seats, windows, doors, etc. These sensors may provide status data from the openings indicating, e.g., whether a window is open or closed, whether a seat is occupied, etc. That is, data provided by the sensors 108 may be used to aid in detecting occupancy, such as pressure sensors within the vehicle seats, door sensors, cameras etc. This occupant data from these sensors 108 may be used in combination with the audio signals to determine the occupancy, including the number of occupants.

The sensors 108 may include at least one camera configured to provide for facial recognition of the occupant(s). The camera may also be configured to detect non-verbal cues as to the driver's behavior such as the direction of the user's gaze, user gestures, etc. The camera may monitor the driver head position, as well as detect any other movement by the user, such as a motion with the user's arms or hands, shaking of the user's head, etc. In the example of a camera, the camera may provide imaging data taken of the user to indicate certain movements made by the user. The camera may be a camera capable of taking still images, as well as video and detecting user head, eye, and body movement. The camera may include multiple cameras and the imaging data may be used for qualitative analysis. For example, the imaging data may be used to determine if the user is looking at a certain location or vehicle display. Additionally or alternatively, the imaging data may also supplement timing information as it relates to the user motions or gestures. This data may be used as command input to allow a user to select functions of the vehicle 104 that may be accessible via movements or gestures.

The sensors 108 may also detect a vehicle state such as a parked state, driving state, idle state, etc. These vehicle states may be detected by a motion sensor, but may be additionally or alternatively received by the processor 106 from a vehicle control module such as a body control module (BCM), electronics control module (ECM), etc. The pulse unit 204, as described with respect to FIG. 2 herein, may also provide such information.

The vehicle 104 may include an audio system having audio playback functionality through vehicle loudspeakers 148 or headphones. The audio playback may include audio from sources such as a vehicle radio, including satellite radio, decoded amplitude modulated (AM) or frequency modulated (FM) radio signals, and audio signals from compact disc (CD) or digital versatile disk (DVD) audio playback, streamed audio from a mobile device, commands from a navigation system, etc. The loudspeakers 148 may also play music for the the contextual answering system 200, as well as continuously loop the karaoke signals a discussed herein.

As explained, the vehicle 104 may include various displays 160 and user interfaces, including HUDs, center console displays, steering wheel buttons, etc. These screens, buttons, and other physical controls such as stalks or knobs may be configured to receive user input to allow the user to select functions of the vehicle 104. Visual displays may be configured to provide visual outputs to the user. In one example, the display 160 may provide textual instructions or other information relevant to the contextual answering system 200, to the vehicle occupant.

While not specifically illustrated herein, the vehicle 104 may include numerous other systems such as GNSS systems, human-machine interface (HMI) controls, video systems, etc. The processing system 130 may use inputs from various vehicle systems, including the loudspeaker 148 and the sensors 152. For example, the multimodal processing system 130 may determine whether an utterance by a user is system-directed (SD) or non-system directed (NSD). SD utterances may be made by a user with the intent to affect an output within the vehicle 104 such as a spoken command of "turn on the music." A NSD utterance may be one spoken during conversation to another occupant, while on the phone, or speaking to a person outside of the vehicle 104. These NSDs are not intended to affect a vehicle output or system. The NSDs may be human-to-human conversations. In some examples, a wake up word may be used during live playback of a singer's voice. In this case the processor 106 may provide ICC and/or voice assistant functionality without the utterance being affected by voice effects or voice filters that are applied for karaoke.

While an automotive system is discussed in detail here, other applications may be appreciated. For example, similar functionally may also be applied to other, non-automotive cases, e.g., for augmented reality or virtual reality cases with smart glasses, phones, eye trackers in living environment, etc. While the terms "user" is used throughout, this term may be interchangeable with others such as speaker, occupant, etc.

FIG. 2 illustrates an example contextual answering system 200 as referenced with respect to FIG. 1. The answering system 200 may be part of the vehicle processing system 130 of FIG. 1. Additional or alternatively, the contextual answering system 200 may also be arranged as part of the remote server 112 and accessible via the communication network 110.

The answering system 200 may include various components configured to provide contextual based answers to a user utterance. The system 200 may include a head unit 202 within the vehicle 104. The system 200 may also include other various components arranged in the cloud or processed external to the vehicle (e.g., at server 112 via communication network 110 of FIG. 1).

The head unit 202 may be the vehicle infotainment system, including a unified hardware interface, including screens (e.g., display 160 of FIG. 1), buttons, controls, cameras, etc. In some examples, the head unit 202 may be arranged at or near a center console or dashboard of the vehicle. The head unit 202 may include audio components such as microphones, speakers., etc. In one example, the head unit 202 may include the microphone 132 and/or loudspeaker 148 of FIG. 1. The head unit 202 may be responsible for acquiring or receiving user feedback via touch screens, buttons, gestures, audible commands, etc. The head unit 202 may also interface with a user's mobile device via wired or wireless communication within the vehicle.

The head unit 202 may be configured to receive a command from a vehicle occupant. This command may be an audible command or utterance received via the loudspeaker 148. For example, the utterance may include a question about a vehicle feature, such as "when I reverse, an alarm sounds. When a trailer is hooked up a button keep blinking. Can you help?" In another example, the utterance may be "I'm continuously attempting to set up my android phone XR to double for my key-fob. I am repeatedly failing I suspect the car might to be switched to ON. Is this true?" In yet another example, the utterance may be "I am disturbed by the loud wind noise from around 130 km/hr in the area of the back mirror. It cannot be due to the construction of the frameless windows. My last did not have this problem. Is this normal or can you improve it by adjusting the windows?"

In non-vehicle examples, the head unit 202 may be a user device, such as a mobile device, but may also include or be embedded in other household or industrial devices, such as a personal assistant device (e.g., ALEXA, GOOGLE HOME, etc.), appliance, smart device such as a speaker, screen, etc.

Once the head unit 202 receives the utterance, the head unit 202 may transmit a request to a dialogue manager 206. The dialogue manager 206 may receive the utterance and translate the utterance to a situation description. This may include parsing the utterance into known features and words. While parsing, the dialog manager 206 may take into consideration whether the question should be answered from one section of the document (e.g., owner's manual) or whether the question should be combined with various paragraphs from different sections of the document depending on the context of the question. At last, parsing also considers the sensor information of the vehicle. For example, if user asks, "how can I open the trunk", if car is in the driving state, the answer will be retrieved from the warning messages of the owner's manual to describe that the vehicle is in the driving state and the system is unable to complete the command at this time. The system may further advise that the driver shall repeat this question when vehicle is in the park state. While vehicle is in the park state, an answer may be presented to the user explaining instructions to open the trunk (manually or automatically). The dialogue manager 206 may receive information from a pulse unit 208. The pulse unit 208 may identify the current state of the vehicle, which may be required as decision making parameter to provide answers (i.e., answers will differ depending on if vehicle is moving or not).

The dialogue manager 206 may transmit the situation description to a contextual reasoning unit 210. The contextual reasoning unit 210 may interface with a vehicle status backend 216. The vehicle status backend 216 may determine whether the answer requires additional data, typically provided by vehicle sensors. This sensor data 220 may include any type of sensor or feedback component within or on the vehicle, including, but not limited to cameras, microphones, lidars, sonars, radars, haptic sensors, biometric sensors, weight or force feedback devices, sun load, moisture, etc. Such sensors may be configured to provide vehicle environment data both inside and/or external to the vehicle, including data about the driver and occupants, weather conditions external to the vehicle, for example.

This data may be supplied to the backend 216 by the vehicle 104, as well as the server 112 (as shown in FIG. 1). The backend 216 may also receive data from a Q&A engine 226 that is configured to interface with a plurality of knowledge bases 212. The knowledge base 212 may be one of a vehicle manual, database, frequency asked question (FAQ) listing, application programming interface (API), to name a few. The knowledge bases 212 may also interrelate with a vehicle state 222, which may include uploaded content from a vehicle server or dashboard. Such data may be uploaded via vehicle-to-vehicle (V2V) communications, over the air, or via direct connection via a diagnostics port on the vehicle.

The vehicle status backend 216 may be provided the contextual reasoning unit 210 with additional context data from the knowledge bases 212 and Q&A engine 226 to aid in understanding the utterance. This may include background knowledge of vehicle maintenance, etc. The contextual reasoning unit 210 may indicate which one of a plurality of knowledge bases 212 may be more likely to provide an answer to the utterance received at the head unit 202. The contextual reasoning unit 210, said another way, may where to look for an answer to the utterance based on the situation description provided by the dialogue manager 206.

The contextual reasoning unit 210 may then determine whether additional contextual information is required from the dialogue manager 206.

In response to the request for more contextual information, the dialogue manager 206 may trigger a presentation manager 224 with the request. The presentation manager 206 may request information from a Q&A engine 226. This engine 226 may again parse the utterance received by the head unit 202 via semantic question analysis, and/or deep learning based answer selection. The Q&A engine 226 may collect information and other contextual data related to the utterance and the situation description provided by the dialogue manager 224. The semantic question analysis module may consider the semantic meaning of the user question, available information (e.g., owner's manual, as well as other OEM content sources) and combine this information with sensor information to decide on the answer. The semantic question analysis module may also decide if the answer should be presented to only consider the text present in the available information, or with images, video, etc., each provided by the OEMs. That is, during the parsing of the document and information to store in its repository, this module learns the semantic meaning associated with each of the provided content, and such semantic meaning is useful using deep learning technology to match with the incoming user context (along with additional context such as sensors).

Once the Q&A engine 226 acquires an understanding based on the utterance and the data provided by the contextual reasoning unit 210, the Q&A engine 226 is configured to interface with the knowledge bases 212 to acquire information or data related to the utterance. The Q&A engine 226 may determine that the answer to the utterance is within the vehicle manual, for example. Once the Q&A engine 226 has identified the answer, the Q&A engine 226 may transmit the answer to the presentation manager 224.

As explained, there may be several knowledge bases 212 that provide information regarding vehicle features and functions and the Q&A engine 226 may review several of these entities for relevant information. Preferably, the Q&A engine 226 would focus on a single knowledge base to decrease processing time and increase reliability of the answer. The entities may each be associated with a level of trustworthiness. Such level may be based on the source of the knowledge base. For example, the vehicle manual may have a high trustworthiness level because the manual is typically produced and managed by the vehicle manufacturer. Sensor data from the vehicle may also have a high level of trustworthiness due to its digital output and coming from the vehicle components. Knowledge bases 212 with lower levels of trustworthiness may include websites or forums relating to the vehicle, such as blogs, Q&A forums for vehicle owners, etc.

Each knowledge base 212 may be assigned a trustworthiness level, which may simply be a ranking relative to the other entities, or additionally or alternatively, may be a score. The scores may range from one to five, in one example, with one being the highest level of trustworthiness. By assigning a level of trustworthiness to the entities, a hierarchy of knowledge sources is created, allowing the Q&A engine 226 to more quickly retrieve relevant and trustworthy answers. For example, the Q&A engine 226 may first look to sensor data before looking to the vehicle manual to locate an answer. If both of those fail to provide relevant information, the Q&A engine 226 may then look to online Q&A forums, etc. This hierarchy is merely exemplary and other orders of entities may be appreciated.

The presentation manager 224 may analyze the answer to determine how to present the answer to the user. Once this is determined, the dialogue manager 206 transmits instructions to the head unit 202 to present the answer. In one example, the presentation manager 224 may determine whether to present information incrementally, or via a single instruction. In one example, where the answer is a simple instruction, such as "turn off blinker," the answer may be presented as a single answer. In another example, where multiple instructions may form the answer, the answer may be presented incrementally. The answers may be presented in any number of ways, including audibly via the vehicle speakers, visually though the display, etc. The answers may also be presented via the user's device, or other devices. In one example, the answer may also give context for where the answer was derived, such as "according to the manual, you should turn off your blinker."

While an exemplary modularization of the answering system 200 is described herein, it should be noted that components of the answering system 200 may be incorporated into fewer components or may be combined in fewer components or even into a single component. For instance, while each of the head unit 202, dialogue manager 206, pulse unit 208, contextual reasoning unit 210, knowledge bases 212, vehicle status backend 216, presentation manager 224, and Q&A engine 226 are described separately, these components may be implemented separately or in combination by one or more controllers in hardware and/or a combination of software and hardware.

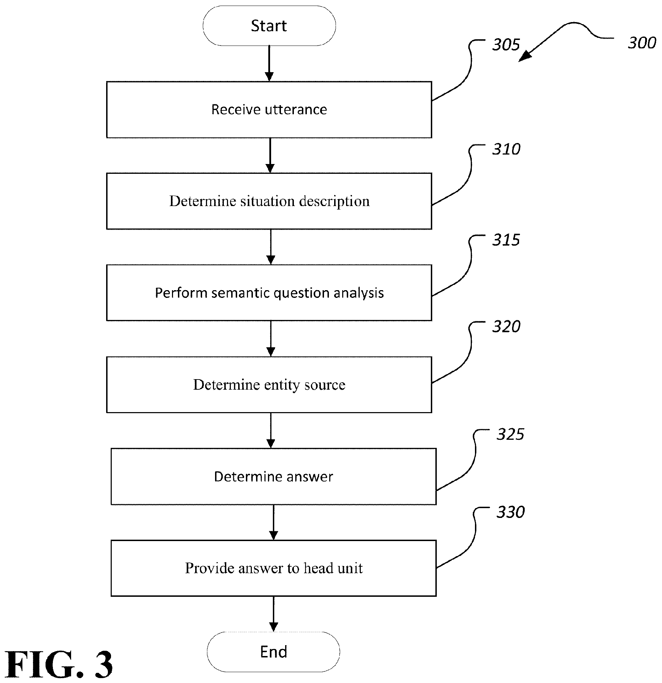

FIG. 3 illustrates an example process 300 for the contextual answering system 200 of FIG. 2. The process 300 may be carried out via the cloud components of the system 200, in an example. The process 300 may begin at block 305 where the answering system 200 receives the utterance from the head unit 202. As explained above, the utterance may be a command or a question uttered audibly by a vehicle occupant. The utterance may be in the form of a simplistic question, such as "how do I park." The controller may receive the utterance at the dialogue manager 206, as explained above with respect to FIG. 2.

At block 310, the answering system 200 may be programmed to determine a situation description for the utterance. The situation description include parsing key words detected in the utterance.

At block 315, the answering system 200 may be programmed to perform semantic question analysis, which may include receiving contextual vehicle data. This analysis may be similar to the functions described with respect to the vehicle backend 216 and Q&A engine 226 of FIG. 2. For example, if the sensor data indicated that the vehicle is in reverse, then the controller may determine, in conjunction with the phrase "how do i park," that the user may desire to use a park assist feature of the vehicle. The contextual data may also identify vehicle maintenance issues, weather conditions, vehicle occupant data, to name some examples.

At block 320, the answering system 200 may be programmed to determine a knowledge source for the utterance based on the semantic question analysis and/or the contextual data. The knowledge base 212 may include any number of information sources for providing answers in response to the utterance. As explained, the knowledge base 212 may be one of a vehicle manual, database, frequency asked question (FAQ) listing, application programming interface (API), to name a few. The controller may select the knowledge base 212 based on words parsed from the utterance, contextual data, etc. For example, if the user asks how to park, the controller may search the knowledge bases 212 for references to parking. The controller may do this based on a level of trustworthiness or hierarchy of the knowledge bases 212. For example, the controller may first search through the vehicle manual, as it is one of the more trusted sources of information based on the present hierarchy. Should the controller not find relevant data in the vehicle manual, the controller may then look to the next knowledge base 212, such as an FAQ forum. Should the controller not find relevant data in the FAQ forum, the controller may then to look to another knowledge base 212 such as articles published on the internet, and so on. This listing and hierarchy is merely exemplary and other entities or sources may be included, in a differing order, etc.

Once the answering system 200 has determined a reliable knowledge base 212 source, the process 300 may proceed to block 325. At block 325, the controller may generate an answer to the utterance based on the information from the selected knowledge base 212 source. For example, the controller may determine that, according to vehicle manual, to use park assist, the user must select a certain icon on the display and release the steering wheel.

At block 330, the answering system 200 may provide the answer to the head unit with instructions to convey the answer to the user. These instructions may include audible and visual conveyance, and may be in the form of iterative or step-by-step instructions. The process may end.

While the use of a parking feature is described by way of an example in the above process 300, numerous other examples may be appreciated, relating to vehicle features, maintenance, external alerts, etc. For example, the utterance may include a question about a vehicle feature, such as "when I reverse, an alarm sounds. When a trailer is hooked up a button keep blinking. Can you help?" In this example, the controller may look to the vehicle manual and determine that there is a button to silence the alarm on the vehicle's steering wheel. Once determining this, the controller may instruct the head unit 202 to audibly play the answer, in the form of, for example, "according to the owner's manual, you can use the button on the steering wheel to turn off the alarm." Notably, the user did not ask "how do I turn off the alarm when backing up a trailer," but instead the user gave contextual data in a conversational way. The contextual answering system 200 is configured to contextually and systematically identify an answer to the utterance without it being in an expected to explicit form.

In another example, the utterance may be "I'm continuously attempting to set up my android phone XR to double for my key-fob. I am repeatedly failing I suspect the car might to be switched to ON. Is this true?" In this example, the controller may again look to the vehicle manual and determine that vehicle needs to be turned on for this feature to be enabled. Once determining this, the controller may instruct the head unit 202 to audibly play the answer, in the form of, for example, "according to the owner's manual, your car needs to be turned on for this feature."

In yet another example, the utterance may be "I am disturbed by the loud wind noise from around 130km/hr in the area of the back mirror. It cannot be due to the construction of the frameless windows. My last car did not have this problem. Is this normal or can you improve it by adjusting the windows?" In this example, the controller may first look to the vehicle manual and determine that there is insufficient information in the manual. The controller may then look to FAQ forums and determine that a common issue is that the side-view mirror is loose. In response, the controller may instruct the head unit 202 to audibly play the answer, in the form of, for example, "according to the manufacturer knowledge base, your side view mirror may be loose. Please visit the dealership to address the issue."

Thus, the examples and situations are numerous. The users may appreciate a more robust question and answer system, enjoy more features on their vehicle, and have a general increase in satisfaction due to the iterative and trusting approach taken by the contextual answering system 200.

While examples are described herein, other vehicle systems may be included and contemplated. Although not specifically shown, the vehicle may include on-board automotive processing units that may include an infotainment system that includes a head unit and a processor and a memory. The infotainment system may interface with a peripheral-device set that includes one or more peripheral devices, such as microphones, loudspeakers, the haptic elements, cabin lights, cameras, the projector and pointer, etc. The head unit may execute various applications such as a speech interface and other entertainment applications, such as a karaoke application. Other processing include text to speech, a recognition module, etc. These systems and modules may respond to user commands and requests.

Computing devices described herein generally include computer-executable instructions, where the instructions may be executable by one or more computing devices such as those listed above. Computer-executable instructions may be compiled or interpreted from computer programs created using a variety of programming languages and/or technologies, including, without limitation, and either alone or in combination, Java^{™}, C, C++, C#, Visual Basic, Java Script, Perl, etc. In general, a processor (*e.g.,* a microprocessor) receives instructions, *e.g.,* from a memory, a computer-readable medium, etc., and executes these instructions, thereby performing one or more processes, including one or more of the processes described herein. Such instructions and other data may be stored and transmitted using a variety of computer-readable media.

While exemplary embodiments are described above, it is not intended that these embodiments describe all possible forms of the invention. Rather, the words used in the specification are words of description rather than limitation, and it is understood that various changes may be made without departing from the scope of the invention as claimed. Additionally, the features of various implementing embodiments may be combined to form further embodiments of the invention.

## Claims

1. A contextual answering system (100, 200) for processing a user spoken utterance and providing a response to the user spoken utterance, comprising:
a vehicle head unit (202) configured to receive microphone signals indicative of a user utterance; and
a processor (106) programed to :
receive data indicative of a vehicle state, wherein the vehicle state is one of a driving state and a parked state,
receive the user spoken utterance,
perform semantic analysis on the user spoken utterance based on a context of the user spoken utterance and vehicle state,
**characterized by**
selecting a knowledge base as a source for information regarding the user spoken utterance based on the semantic analysis from a list of knowledge bases, each knowledge base ranked with a level of trustworthiness to rank the knowledge base relative to the other knowledge bases, where the selection of the knowledge base include:
determining whether the knowledge base ranked highest in the hierarchy includes information regarding the user spoken utterance, and
determining whether a second knowledge base ranked as next highest in the knowledge base hierarchy includes information regarding the user spoken utterance in response to the knowledge base with the highest ranking lacking the information regarding the user spoken utterance; and
providing a response to the user spoken utterance from the selected knowledge base to the vehicle head unit.

2. The system (100, 200) of claim 1, wherein the list of knowledge bases includes a knowledge base hierarchy based on the level of trustworthiness, such that the knowledge bases ranked higher in trustworthiness in the knowledge base hierarchy are preferred to be used as the source for information.

3. The system (100, 200) of claim 1, wherein the knowledge base ranked the highest by the knowledge base hierarchy is supplied by a manufacturer of the vehicle.

4. The system (100, 200) of claim 3, wherein the processor (106) is programed to instruct the head unit to audibly or visually present the response.

5. A method for processing a user spoken utterance and providing a response to the user spoken utterance, the method comprising:
receiving data indicative of a vehicle state of a vehicle (104), wherein the vehicle state is one of a driving state and a parked state,
receiving the user spoken utterance,
performing semantic analysis on the user spoken utterance based on a context of the user spoken utterance and vehicle state, the method being **characterized by**
selecting a knowledge base as a source for information regarding the user spoken utterance based on the semantic analysis from a list of knowledge bases, each knowledge base ranked with a level of trustworthiness to rank the knowledge base relative to the other knowledge bases, where the selection of the knowledge base include:
determining whether the knowledge base ranked highest in the hierarchy includes information regarding the user spoken utterance, and
determining whether a second knowledge base ranked as next highest in the knowledge base hierarchy includes information regarding the user spoken utterance in response to the knowledge base with the highest ranking lacking the information regarding the user spoken utterance; and
providing a response to the user spoken utterance from the selected knowledge base to a user device.

6. The method of claim 5, wherein the list of knowledge bases includes a knowledge base hierarchy based on the level of trustworthiness.

7. The method of claim 5, further comprising instructing the user device to audibly or visually present the response.

## Patentansprüche

1. Kontextbezogenes Antwortsystem (100, 200) zum Verarbeiten einer vom Benutzer gesprochenen Äußerung und Bereitstellen einer Antwort auf die vom Benutzer gesprochene Äußerung, umfassend:
eine Fahrzeugkopfeinheit (202), die dazu ausgelegt ist, Mikrofonsignale zu empfangen, die eine Benutzeräußerung angeben; und
einen Prozessor (106), der dazu programmiert ist:
Daten zu empfangen, die einen Fahrzeugzustand angeben, wobei der Fahrzeugzustand ein Fahrzustand oder ein geparkter Zustand ist,
die vom Benutzer gesprochene Äußerung zu empfangen,
eine semantische Analyse der vom Benutzer gesprochenen Äußerung basierend auf einem Kontext der vom Benutzer gesprochenen Äußerung und des Fahrzeugzustands durchzuführen,
**gekennzeichnet durch**
Auswählen einer Wissensbasis als Quelle für Informationen bezüglich der vom Benutzer gesprochenen Äußerung basierend auf der semantischen Analyse aus einer Liste von Wissensbasen, wobei jede Wissensbasis mit einem Grad der Vertrauenswürdigkeit eingestuft ist, um die Wissensbasis relativ zu den anderen Wissensbasen einzustufen, wobei die Auswahl der Wissensbasis Folgendes beinhaltet:
Bestimmen, ob die Wissensbasis, die am höchsten in der Hierarchie eingestuft ist, Informationen bezüglich der vom Benutzer gesprochenen Äußerung beinhaltet, und
Bestimmen, ob eine zweite Wissensbasis, die in der Wissensbasishierarchie als nächsthöchste eingestuft ist, Informationen bezüglich der vom Benutzer gesprochenen Äußerung als Reaktion darauf beinhaltet, dass der Wissensbasis mit der höchsten Einstufung die Informationen bezüglich der vom Benutzer gesprochenen Äußerung fehlen; und
Bereitstellen einer Antwort auf die vom Benutzer gesprochene Äußerung von der ausgewählten Wissensbasis an die Fahrzeugkopfeinheit.

2. System (100, 200) nach Anspruch 1, wobei die Liste von Wissensbasen eine Wissensbasishierarchie basierend auf dem Grad der Vertrauenswürdigkeit beinhaltet, so dass die Wissensbasen, die in der Wissensbasishierarchie hinsichtlich der Vertrauenswürdigkeit höher eingestuft sind, bevorzugt als Quelle für Informationen verwendet werden.

3. System (100, 200) nach Anspruch 1, wobei die Wissensbasis, die durch die Wissensbasishierarchie am höchsten eingestuft ist, von einem Hersteller des Fahrzeugs geliefert wird.

4. System (100, 200) nach Anspruch 3, wobei der Prozessor (106) dazu programmiert ist, die Kopfeinheit anzuweisen, die Antwort akustisch oder visuell darzustellen.

5. Verfahren zum Verarbeiten einer vom Benutzer gesprochenen Äußerung und Bereitstellen einer Antwort auf die vom Benutzer gesprochene Äußerung, wobei das Verfahren Folgendes umfasst:
Empfangen von Daten, die einen Fahrzeugzustand eines Fahrzeugs (104) angeben, wobei der Fahrzeugzustand ein Fahrzustand oder ein geparkter Zustand ist,
Empfangen der vom Benutzer gesprochenen Äußerung,
Durchführen einer semantischen Analyse der vom Benutzer gesprochenen Äußerung basierend auf einem Kontext der vom Benutzer gesprochenen Äußerung und des Fahrzeugzustands, wobei das Verfahren **gekennzeichnet ist durch** Auswählen einer Wissensbasis als Quelle für Informationen bezüglich der vom Benutzer gesprochenen Äußerung basierend auf der semantischen Analyse aus einer Liste von Wissensbasen,
wobei jede Wissensbasis mit einem Grad der Vertrauenswürdigkeit eingestuft ist, um die Wissensbasis relativ zu den anderen Wissensbasen einzustufen, wobei die Auswahl der Wissensbasis Folgendes beinhaltet:
Bestimmen, ob die Wissensbasis, die am höchsten in der Hierarchie eingestuft ist, Informationen bezüglich der vom Benutzer gesprochenen Äußerung beinhaltet, und
Bestimmen, ob eine zweite Wissensbasis, die in der Wissensbasishierarchie als nächsthöchste eingestuft ist, Informationen bezüglich der vom Benutzer gesprochenen Äußerung als Reaktion darauf beinhaltet, dass der Wissensbasis mit der höchsten Einstufung die Informationen bezüglich der vom Benutzer gesprochenen Äußerung fehlen; und
Bereitstellen einer Antwort auf die vom Benutzer gesprochene Äußerung aus der ausgewählten Wissensbasis an eine Benutzervorrichtung.

6. Verfahren nach Anspruch 5, wobei die Liste von Wissensbasen eine Wissensbasishierarchie basierend auf dem Grad der Vertrauenswürdigkeit beinhaltet.

7. Verfahren nach Anspruch 5, ferner umfassend das Anweisen der Benutzervorrichtung, die Antwort akustisch oder visuell darzustellen.

## Revendications

1. Système de réponse contextuel (100, 200) pour traiter un énoncé verbal utilisateur et fournir une réponse à l'énoncé verbal utilisateur, comprenant :
une unité tête de véhicule (202) configurée pour recevoir des signaux de microphone indicatifs d'un énoncé utilisateur ; et
un processeur (106) programmé pour :
recevoir des données indicatives d'un état de véhicule, dans lequel l'état de véhicule est un d'un état de conduite et d'un état en stationnement,
recevoir l'énoncé verbal utilisateur,
réaliser une analyse sémantique sur l'énoncé verbal utilisateur sur la base d'un contexte de l'énoncé verbal utilisateur et de l'état de véhicule,
**caractérisé par**
le fait de sélectionner une base de connaissances en tant que source pour des informations concernant l'énoncé verbal utilisateur sur la base de l'analyse sémantique parmi une liste de bases de connaissances, chaque base de connaissances étant classée avec un niveau de fiabilité pour classer la base de connaissances relativement aux autres bases de connaissances, où la sélection de la base de connaissances inclut les faits suivants :
déterminer si la base de connaissances classée la plus haute dans la hiérarchie inclut des informations concernant l'énoncé verbal utilisateur, et
déterminer si une seconde base de connaissances classée comme étant la plus haute suivante dans la hiérarchie de base de connaissances inclut des informations concernant l'énoncé verbal utilisateur en réponse au cas où la base de connaissances avec le classement le plus haut n'aurait pas les informations concernant l'énoncé verbal utilisateur ; et
fournir une réponse à l'énoncé verbal utilisateur provenant de la base de connaissances sélectionnée à l'unité tête de véhicule.

2. Système (100, 200) de la revendication 1, dans lequel la liste de bases de connaissances inclut une hiérarchie de base de connaissances basée sur le niveau de fiabilité, de manière telle qu'il est préféré d'utiliser les bases de connaissances classées plus hautes en fiabilité dans la hiérarchie de base de connaissances en tant que source pour des informations.

3. Système (100, 200) de la revendication 1, dans lequel la base de connaissances classée la plus haute par la hiérarchie de base de connaissances est procurée par un fabricant du véhicule.

4. Système (100, 200) de la revendication 3, dans lequel le processeur (106) est programmé pour donner l'instruction à l'unité tête de présenter la réponse de façon audible ou visuelle.

5. Procédé pour traiter un énoncé verbal utilisateur et fournir une réponse à l'énoncé verbal utilisateur, le procédé comprenant les faits suivants :
recevoir des données indicatives d'un état de véhicule d'un véhicule (104), dans lequel l'état de véhicule est un d'un état de conduite et d'un état en stationnement,
recevoir l'énoncé verbal utilisateur,
réaliser une analyse sémantique sur l'énoncé verbal utilisateur sur la base d'un contexte de l'énoncé verbal utilisateur et de l'état de véhicule, le procédé étant **caractérisé par** le fait de sélectionner une base de connaissances en tant que source pour des informations concernant l'énoncé verbal utilisateur sur la base de l'analyse sémantique parmi une liste de bases de connaissances, chaque base de connaissances étant classée avec un niveau de fiabilité pour classer la base de connaissances relativement aux autres bases de connaissances, où la sélection de la base de connaissances inclut les faits suivants :
déterminer si la base de connaissances classée la plus haute dans la hiérarchie inclut des informations concernant l'énoncé verbal utilisateur, et
déterminer si une seconde base de connaissances classée comme étant la plus haute suivante dans la hiérarchie de base de connaissances inclut des informations concernant l'énoncé verbal utilisateur en réponse au cas où la base de connaissances avec le classement le plus haut n'aurait pas les informations concernant l'énoncé verbal utilisateur ; et
fournir une réponse à l'énoncé verbal utilisateur provenant de la base de connaissances sélectionnée à un dispositif utilisateur.

6. Procédé de la revendication 5, dans lequel la liste de bases de connaissances inclut une hiérarchie de base de connaissances basée sur le niveau de fiabilité.

7. Procédé de la revendication 5, comprenant en outre le fait de donner l'instruction au dispositif utilisateur de présenter la réponse de façon audible ou visuelle.
